# EUROPÄISCHE PATENTANMELDUNG

(11) **EP 3 007 197 A1**
(43) Veröffentlichungstag der Anmeldung: **13.04.2016**
(21) Anmeldenummer: 14187861.1
(22) Anmeldetag: 07.10.2014
(51) Int. Cl.: H01H 9/06, F16P 3/14, G05G 5/00, H01H 3/02

(54) **Näherungs- oder Berührungssensor in einer Werkzeugmaschine**

(71) Anmelder: HILTI Aktiengesellschaft, 9494 Schaan (LI)
(72) Erfinder: Forstner, Markus, 86899 Landsberg (DE); Stock, Francois, 67260 Herbitzheim (FR); Beckert, Benedikt, 86159 Augsburg (DE)
(74) Vertreter: Hilti Aktiengesellschaft Corporate Intellectual Property

(57) **Zusammenfassung**

Werkzeugmaschine, enthaltend einen Elektromotor, eine Steuerungseinrichtung zur Steuerung des Elektromotors, wobei die Steuerungseinrichtung wenigstens in einen ersten Betriebsmodus und einen zweiten Betriebsmodus einstellbar ist, ein Schalter, insbesondere ein Potentiometer, zum Betätigen der Steuerungseinrichtung und wenigstens eine Energiequelle zur Versorgung der Werkzeugmaschine mit elektrischer Spannung.

An der Werkzeugmaschine ist wenigstens ein Näherungs- oder Berührungssensor vorgesehen zum reversiblen Wechseln von dem ersten Betriebsmodus in den zweiten Betriebsmodus der Steuerungseinrichtung, wobei der Näherungs- oder Berührungssensor durch die Annäherung wenigstens eines Körperteils eines Anwenders der Werkzeugmaschine aktivierbar ist.

## Beschreibung

Die vorliegende Erfindung bezieht sich auf eine Werkzeugmaschine, enthaltend einen Elektromotor, eine Steuerungseinrichtung zur Steuerung des Elektromotors, wobei die Steuerungseinrichtung wenigstens in einen ersten Betriebsmodus und einen zweiten Betriebsmodus einstellbar ist, ein Schalter, insbesondere ein Potentiometer, zum Betätigen der Steuerungseinrichtung und wenigstens eine Energiequelle zur Versorgung der Werkzeugmaschine mit elektrischer Spannung.

Werkzeugmaschinen gemäß dem Stand der Technik weisen zumeist einen Schalter auf, mit dem der Elektromotor im Inneren der Werkzeugmaschine betätigt werden kann. Derartige Schalter sind an modernen Werkzeugmaschinen häufig in Form eines Potentiometers (auch als Poti oder Poti-Schalter bezeichnet) gestaltet. Ein Potentiometer ist dabei im Wesentlichen ein elektrisches Widerstandsbauelement, dessen Widerstandswerte mechanisch (durch Drehen oder Verschieben) veränderbar ist. Es weist mindestens zwei Anschlüsse auf und wird vorwiegend als stetig einstellbarer Spannungsteiler eingesetzt. Der Spannungsteiler besteht wiederum aus einem elektrisch nichtleitenden Träger, auf dem ein Widerstandsmaterial aufgebracht ist, zwei Anschlüssen an den beiden Enden des Widerstandselements und einem beweglichen Gleitkontakt (auch als Schleifer bezeichnet), der den festen Gesamtwiderstand elektrisch in zwei entgegengesetzte Teilwiderstände aufteilt.

Ein als mechanischer Potentiometer ausgestalteter Schalter kann jedoch gewisse Probleme aufweisen. Mechanische Potentiometer arbeiten nämlich aufgrund des Abriebes des Widerstandsmaterials durch den beweglichen Gleitkontakt (Schleifer) nicht verschleißfrei. Dieser Verschleiß kann sowohl zu einer fehlerhaften Funktion als auch zu einem Ausfall des Schalters bzw. zu einem Ausfall der gesamten Werkzeugmaschine führen. Das Problem wird insbesondere dadurch verstärkt, dass der Schalter an Werkzeugmaschinen einer starken Beanspruchung durch ein häufiges Betätigen unterworfen ist.

Darüber hinaus beansprucht ein mechanischer Schalter (wie z.B. ein Potentiometer) relativ viel Strom. Da für eine akkubetriebene Werkzeugmaschine nur eine begrenzte Menge an elektrischer Energie in Form des jeweils angeschlossenen Akkumulators zur Verfügung steht, kann ein hoher Stromverbrauch des Schalters über einen längeren Zeitraum durchaus problematisch für die Standzeit der Werkzeugmaschine werden.

Aufgabe der vorliegenden Erfindung ist es daher, die vorstehend genannten Probleme zu lösen und insbesondere eine Werkzeugmaschine zur Verfügung zu stellen, an der ein Verschleißen des Schalters sowie der Strombedarf für den Schalter möglichst reduziert ist.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird eine Werkzeugmaschine bereitgestellt, enthaltend einen Elektromotor, eine Steuerungseinrichtung zur Steuerung des Elektromotors, wobei die Steuerungseinrichtung wenigstens in einen ersten Betriebsmodus und einen zweiten Betriebsmodus einstellbar ist, ein Schalter, insbesondere ein Potentiometer, zum Betätigen der Steuerungseinrichtung und wenigstens eine Energiequelle zur Versorgung der Werkzeugmaschine mit elektrischer Spannung.

Erfindungsgemäss ist wenigstens ein Näherungs- oder Berührungssensor vorgesehen zum reversiblen Wechseln von dem ersten Betriebsmodus in den zweiten Betriebsmodus der Steuerungseinrichtung, wobei der Näherungs- oder Berührungssensor durch die Annäherung wenigstens eines Körperteils eines Anwenders der Werkzeugmaschine aktivierbar ist. Hierdurch kann die Anzahl der Schaltervorgänge zum Betätigen der Steuerungseinrichtung bei der Verwendung der Werkzeugmaschine verringert werden, wodurch die mechanische Beanspruchung und folglich der Verschleiß des Schalters reduziert wird.

Insbesondere kann durch die vorliegende Erfindung auf ein Betätigen des Schalters zu Beginn der Verwendung der Werkzeugmaschine verzichtet werden, mit dem die Elektronik der Werkzeugmaschine "aufgeweckt" wird. Mit "Aufwecken der Elektronik" ist der reversible Wechsel von dem ersten Betriebsmodus in den zweiten Betriebsmodus der Steuerungseinrichtung gemeint. Gemäß einer vorteilhaften Ausführungsform der vorliegenden Erfindung kann daher vorgesehen sein, dass der erste Betriebsmodus der Steuerungseinrichtung ein Abschaltmodus und der zweite Betriebsmodus der Steuerungseinrichtung ein Bereitschaftsmodus ist.

Um eine ergonomisch möglichst optimale Anbringung des Näherungs- oder Berührungssensors an der Werkzeugmaschine zu erreichen und um möglichst keine zu große zeitliche Verzögerung zwischen dem Betätigen des Näherungs- oder Berührungssensors und des Schalters aufkommen zu lassen, kann vorteilhafterweise vorgesehen sein, dass der Näherungs- oder Berührungssensor an dem Schalter zum Betätigen der Steuerungseinrichtung positioniert ist.

Gemäß einer vorteilhaften Ausführungsform der vorliegenden Erfindung kann vorgesehen sein, dass der Näherungs- oder Berührungssensor in Form eines optischen Näherungs- oder Berührungssensors ausgestaltet ist. Die Ausgestaltung des Näherungs- oder Berührungssensors hat den Vorteil, dass der Näherungs- oder Berührungssensor nicht durch ferromagnetische Stoffe, durch elektrische Felder und/oder durch magnetische Felder gestört werden kann.

Um ein ungewolltes Wechseln der Steuerungseinrichtung von dem ersten Betriebsmodus in den zweiten Betriebsmodus zu verhindern, wenn ein kurzzeitiges sowie unbeabsichtigtes Annähern wenigstens eines Körperteils des Anwenders der Werkzeugmaschine an den Näherungs- oder Berührungssensor vorliegt, kann es gemäß einer weiteren Ausführungsform vorteilhaft sein, dass das Wechseln von dem ersten Betriebsmodus in den zweiten Betriebsmodus der Steuerungseinrichtung erst erfolgt, wenn die Annäherung wenigstens eines Körperteils des Anwenders der Werkzeugmaschine an den Näherungs- oder Berührungssensor eine vorbestimmte Zeitdauer überschreitet.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Ansicht einer netzbetriebenen Werkzeugmaschine mit einem erfindungsgemäßen Näherungs- oder Berührungssensor gemäß einer ersten Ausführungsform;
- Fig. 2: eine schematische Ansicht einer akkubetriebenen Werkzeugmaschine mit einem erfindungsgemäßen Näherungs- oder Berührungssensor gemäß der zweiten Ausführungsform;
- Fig. 3: eine schematische Ansicht einer akkubetriebenen Werkzeugmaschine mit einem erfindungsgemäßen Näherungs- oder Berührungssensor gemäß einer dritten Ausführungsform; und
- Fig. 4: eine schematische Ansicht einer akkubetriebenen Werkzeugmaschine mit einem erfindungsgemäßen Näherungs- oder Berührungssensor gemäß einer vierten Ausführungsform.

### Ausführungsbeispiel:

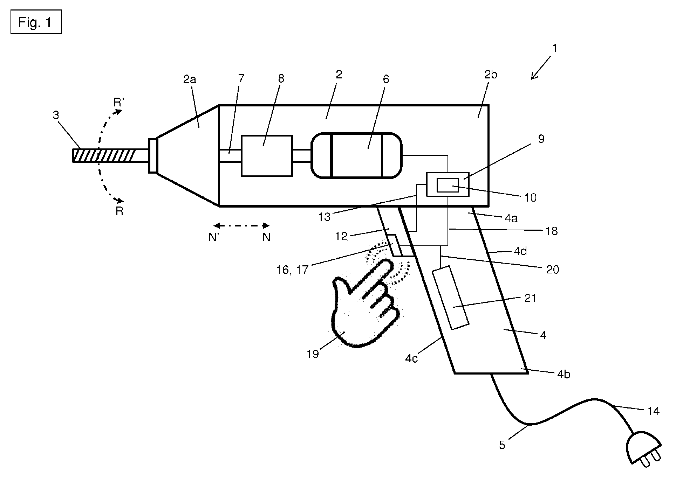

Fig. 1 zeigte schematische Ansicht einer netzbetriebenen Werkzeugmaschine 1 in Form einer Bohrmaschine gemäß einer ersten Ausführungsform. Die als Bohrmaschine ausgestaltete Werkzeugmaschine 1 enthält im Wesentlichen ein Gehäuse 2, ein Werkzeug 3, ein Griffstück 4 und ein Energiequelle 5.

Das Gehäuse 2 enthält ein erstes Ende 2a und ein zweites Ende 2b. In dem Gehäuse 2 ist ein Elektromotor 6 positioniert. Der Elektromotor 6 ist über eine Abtriebswelle 7 mit einem Werkzeug 3 verbunden. Das Werkzeug 3 ist in Form eines Bohrers verwirklicht und befindet sich an dem ersten Ende 2a des Gehäuses 2. Zwischen dem Elektromotor 6 und dem als Bohrer ausgestalteten Werkzeug 3 ist zur Erzeugung variabler Drehzahl- bzw. Drehmomentverhältnisse ein Getriebe 8 positioniert und mit der Abtriebswelle 7 verbunden. Des Weiteren ist in dem Gehäuse 2 eine Steuerungseinrichtung 9 enthalten. Die Steuerungseinrichtung 9 enthält wiederum eine Elektronikeinheit 10 und ist mit dem Elektromotor 6 über eine Verbindungsleitung 11 verbunden. Die Steuerungseinrichtung 9 bzw. die Elektronikeinheit 10 dient zum Beaufschlagen des Elektromotors 6 mit wenigstens Steuer- und Regelsignalen. Mit Hilfe der Steuer- und Regelsignale kann die Drehzahl bzw. das im Elektromotor 6 erzeugte Drehmoment gesteuert und geregelt werden. Die Steuerungseinrichtung 9 kann in verschiedenen Betriebsmodi betrieben werden. Hierbei weist die Steuerungseinrichtung 9 beispielsweise einen ersten Betriebsmodus sowie einen zweiten Betriebsmodus auf. Bei dem ersten Betriebsmodus handelt es sich um einen Abschaltmodus und bei dem zweiten Betriebsmodus handelt es sich um einen Bereitschaftsmodus. Bei dem Abschaltmodus sind die Steuerungseinrichtung 9 sowie die Elektronikeinheit 10 vollständig ausgeschaltet. Bei dem Bereitschaftsmodus oder auch Standby-Betrieb (auch Wartebetrieb genannt) ist die eigentliche Nutzfunktion der Werkzeugmaschine 1 temporär deaktiviert ist, aber jederzeit und ohne Vorbereitungen oder längere Wartezeiten wieder aktivierbar.

An einer Unterseite des Gehäuses 2 ist das Griffstück 4 befestigt. Das Griffstück 4 enthält im Wesentlichen ein oberes Ende 4a, ein unteres Ende 4b, ein vorderes Ende 4c und ein hinteres Ende 4d. Das Griffstück 4 dient dazu wenigstens eine Hand eines Anwenders der Werkzeugmaschine aufzunehmen, mit der die Werkzeugmaschine 1 bedient werden kann. An dem vorderen Ende 4c sowie in der Nähe des oberen Endes 4a des Griffstücks 4 ist ein Schalter 12 positioniert. Der Schalter 12 ist in der vorliegenden Ausführungsform als Potentiometer (auch Poti genannt) ausgestaltet. Der Schalter 12 ist mit der Steuerungseinrichtung 9 über eine Leitung 13 verbunden. Der Schalter 12 dient dazu, die Steuerungseinrichtung 9 zu betätigen. Der Schalter 12 kann hierzu durch den (nicht gezeigten) Anwender reversibel in Richtung N bewegt werden. Der Anwender übt dazu eine gewisse Kraft in Richtung N auf den Schalter 12 aus. Der Schalter 12 enthält ein nicht gezeigtes Federelement, welches dafür sorgt, dass der Schalter 12 in Richtung N' und damit in seine Ausgangsstellung bewegt wird, wenn der Anwender keine Kraft mehr auf den Schalter 12 ausübt. Wenn der Schalter 12 als Potentiometer ausgestaltet ist, kann durch die jeweilige Stellung des Schalters 12 in Richtung N bzw. N' ein dazu entsprechendes Signal an die Steuerungseinrichtung 9 gesendet werden. Mit anderen Worten: wenn der Schalter 12 vollständig, d.h. zu 100% in Richtung N bewegt ist, wird ein entsprechendes Signal an die Steuerungseinrichtung 9 gesendet, dass der Elektromotor 6 sein Leistungsvermögen zu 100% (d.h. maximale Drehzahl) abgeben soll.

Wie bereits vorstehend erwähnt zeigt Fig. 1 eine erste Ausführungsform der erfindungsgemäßen Werkzeugmaschine 1. Gemäß dieser ersten Ausführungsform ist an dem unteren Ende 4b des Griffstücks 4 ein Netzkabel 14 befestigt. Das Netzkabel 14 dient dazu die Werkzeugmaschine 1 mit einer (nicht gezeigten) Netzstromquelle (Steckdose) zu verbinden. Das Netzkabel 14 dient der Werkzeugmaschine 1 gemäß der ersten Ausführungsform als Energiequelle 5. Wie nachfolgend im Detail beschrieben kann die Energiequelle 5 gemäß einer zweiten und dritten Ausführungsform auch in Form eines Akkumulators 15 gestaltet sein.

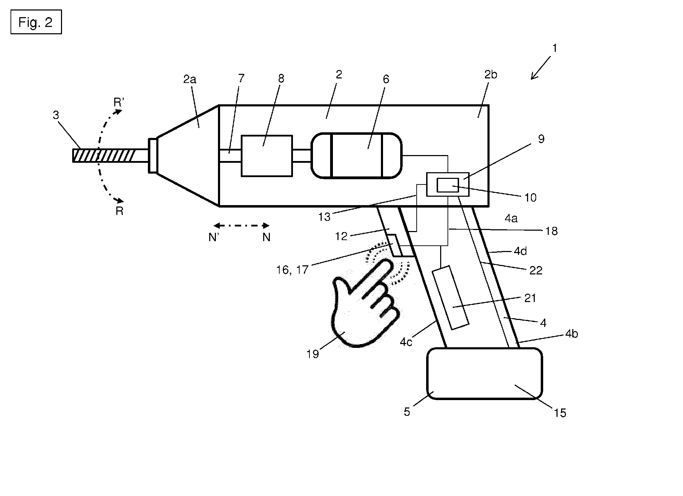

Des Weiteren ist an den Schalter 12 ein Näherungssensor 16 positioniert (vgl. Fig. 1). Gemäß einer gleichwertigen alternativen Ausführungsform der vorliegenden Erfindung kann der Näherungssensor 16 auch durch einen entsprechenden Berührungssensor 17 ersetzt sein. Der Näherungssensor bzw. Berührungssensor 16, 17 ist über eine Leitung 18 mit der Steuerungseinrichtung 9 verbunden und dient dazu die Anwesenheit wenigstens eines Körperteils 19 eines (nicht gezeigten) Anwenders der Werkzeugmaschine 1 in unmittelbarer Nähe des Sensors 16, 17 zu erfassen. Ein Körperteil 19 kann beispielsweise eine Hand des Anwenders sein. Der Begriff "unmittelbare Nähe" kann dabei als eine Distanz von ca. 10 bis 20 mm zwischen Sensor 16, 17 und Körperteil 19 definiert sein. Es ist jedoch auch möglich, dass diese Distanz weniger als 10 mm oder auch mehr als 20 mm beträgt. Der Näherungssensor bzw. Berührungssensor 16, 17 ist über eine Leitung 20 mit einer separaten Batterie 21 als eigene Energiequelle verbunden. Die Batterie 21 ist in dem Griffstück 4 positioniert. Bei der Batterie 21 kann es sich um einen Akkumulator handeln. Es ist jedoch auch möglich, dass keine separate Batterie vorgesehen ist und der Näherungssensor bzw. Berührungssensor 16, 17 über das Netzkabel 14 oder einen Akkumulator 15, welcher zur Energieversorgung des Elektromotors 6 dient (vgl. zweite Ausführungsform der vorliegenden Erfindung; in Fig. 2), mit elektrischen Strom versorgt wird.

Bevorzugte Näherungssensoren bzw. Berührungssensoren 16, 17 schließen unter anderem einen Verbund aus Infrarotsender 23 und Infrarotsensor 24 ein. Des Weiteren kann der Näherungssensor bzw. Berührungssensor 16, 17 kann auch in Form eines kapazitiven Sensors gestaltet sein. Hierbei registriert der kapazitive Sensor eine Änderung der Kapazität beispielsweise in Form einer Frequenzänderung oder einer Änderung der Ladungs- und Entladungszeiten des Kondensators, wenn eine Hand 19 des Anwenders in der Nähe des Näherungssensors bzw. Berührungssensors 16, 17 ist. Alternativ dazu gehört jeder Sensor, der eine inhärente Eigenschaft einer menschlichen Hand, wie z.B. ihre Wärme, ihren Widerstand, ihre Kapazität, ihre Lichtundurchlässigkeit, ihr Reflexionsvermögen, ihre magnetischen Eigenschaften und dergleichen, zum Sinn und Schutzumfang der vorliegenden Erfindung. Eine konsistente Funktion des Sensors sollte vorzugsweise nicht von der Verwendung von Arbeitshandschuhen oder anderen Umhüllungen zum Schutz der Hand des Anwenders abhängig sein.

Wenn der Näherungssensor bzw. Berührungssensor 16, 17 die Annäherung der Hand 19 eines Anwenders erfasst, wird ein entsprechendes Signal über die Leitung 18 an die Steuerungseinrichtung 9 gesendet. Das Signal des Näherungssensors bzw. Berührungssensors 16, 17 dient dazu, die Steuerungseinrichtung 9 von dem ersten Betriebsmodus, d.h. dem Abschaltmodus, in den zweiten Betriebsmodus, d.h. den Bereitschaftsmodus, zu wechseln. Wenn sich die Steuerungseinrichtung 9 in dem Bereitschaftsmodus befindet, kann die Werkzeugmaschine 1 als nächstes durch ein Drücken des Schalters 12 in Richtung N aktiviert werden, sodass der Elektromotor 6 entsprechend der Stellung des Schalters 12 (Stellung des Potentiometers) in Richtung N eine bestimmte Drehzahl erzeugt und diese in Form eines Drehmoments an die Abtriebswelle 7 und schließlich an das Werkzeug (Bohrer) 3 weitergibt.

Dadurch, dass ein Näherungssensor bzw. Berührungssensor 16, 17 an der Werkzeugmaschine 1 vorgesehen ist, braucht der Schalter 12 zum Wechseln von dem ersten Betriebsmodus, d.h. dem Abschaltmodus, in den zweiten Betriebsmodus, d.h. den Bereitschaftsmodus, nicht betätigt zu werden. Hierdurch ist die Anzahl der Betätigungen des Schalters 12 (gerechnet über die Lebensdauer der Werkzeugmaschine 1) wesentlich reduziert und einem vorzeitigen Verschleiß des Schalters 12 effektiv entgegengewirkt.

Fig. 2 zeigt eine zweite Ausführungsform der erfindungsgemäßen Werkzeugmaschine 1, welche im Wesentlichen mit der der ersten Ausführungsform identisch ist. Im Gegensatz zu der ersten Ausführungsform ist die Energieversorgung des Elektromotors 6 durch einen Akkumulator 15 gestaltet. Der Akkumulator 15 ist auswechselbar an dem unteren Ende 4b des Griffstücks 4 positioniert und über eine Leitung 22 mit der Steuerungseinrichtung 9 sowie mit dem Elektromotor 6 verbunden.

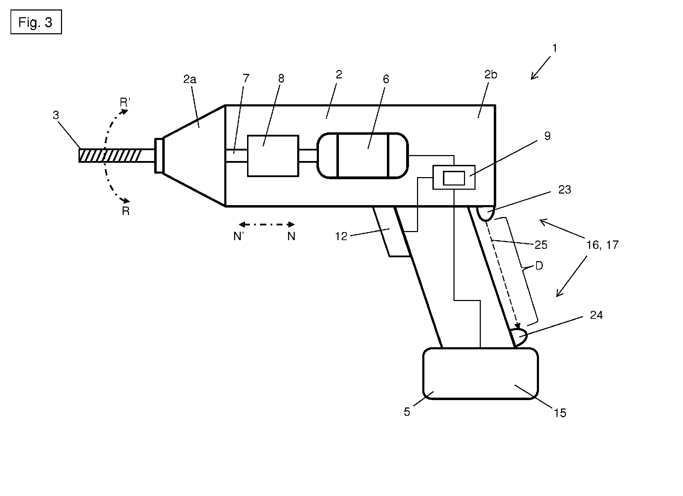

Fig. 3 zeigt eine zweite Ausführungsform der erfindungsgemäßen Werkzeugmaschine 1, welche im Wesentlichen mit der der zweiten Ausführungsform identisch ist. Im Gegensatz zu der zweiten Ausführungsform weist jedoch die Werkzeugmaschine 1 gemäß der dritten Ausführungsform keine separate Batterie zur Energieversorgung des Näherungssensors bzw. Berührungssensors 16, 17. Der Näherungssensor bzw. Berührungssensor 16, 17 wird über eine (nicht gezeigte) Leitung durch den Akkumulator 15 mit elektrischem Strom versorgt. Darüber hinaus ist in der dritten Ausführungsform der Werkzeugmaschine 1 der Näherungssensor bzw. Berührungssensor 16, 17 in Form eines Infrarotsenders 23 und eines Infrarotsensors 24 (Infrarotempfänger) ausgestaltet. Der Infrarotsender 23 sendet kontinuierlich Infrarotlicht in Richtung des Infrarotsensors 24 aus. Der Infrarotsensor 24 dient zum Empfangen dieses Infrarotlichts. Das Infrarotlicht ist in Fig. 3 durch die gestrichelte Linie 25 dargestellt. Wie in Fig. 3 dargestellt, ist der Infrarotsender 23 an dem zweiten Ende 2b des Gehäuses 2 positioniert. Der Infrarotsensor 24 ist an dem unteren Ende 4b des Griffstücks 4 befestigt. Sowohl der Infrarotsender 23 als auch der Infrarotsensor 24 sind an dem hinteren Ende 4d des Griffstücks 4 angeordnet. Es ist jedoch auch möglich, dass der Infrarotsender 23 sowie auch der Infrarotsensor 24 an einer anderen geeigneten Stelle an der Werkzeugmaschine 1 positioniert sind. Solange der Infrarotsensor 24 das von dem Infrarotsender 23 ausgestrahlte Infrarotlicht empfängt verbleibt die Steuerungseinrichtung 9 in dem ersten Betriebsmodus, d.h. in dem Abschaltmodus. Sobald der durch die gestrichelte Linie 25 dargestellte Lichtstrahl in dem Bereich D durch beispielsweise die (nicht gezeigte) Hand des Anwenders unterbrochen und der Infrarotsensor 24 kein Infrarotlicht mehr empfängt, wird ein entsprechendes Signal an die Steuerungseinrichtung 9 über eine Leitung 26 ausgegeben, sodass die Steuerungseinrichtung 9 von dem ersten Betriebsmodus, d.h. dem Abschaltmodus, in den zweiten Betriebsmodus, d.h. den Bereitschaftsmodus, wechselt.

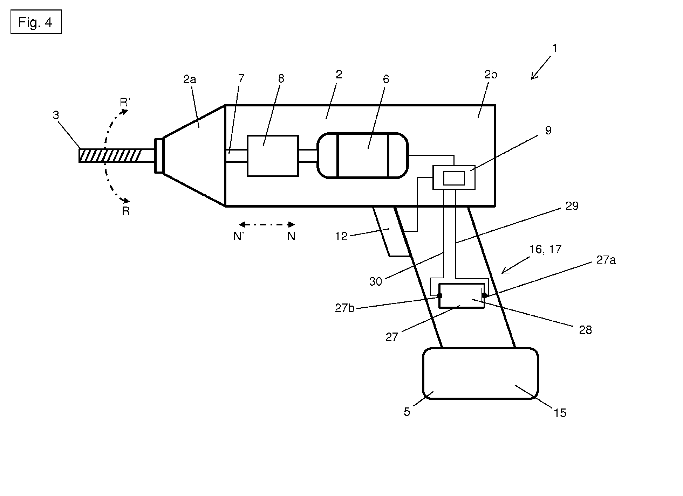

Fig. 4 zeigt eine vierte Ausführungsform der der erfindungsgemäßen Werkzeugmaschine 1. Diese vierte Ausführungsform ist im Wesentlichen identisch mit der dritten Ausführungsform. Der Näherungssensor bzw. Berührungssensor 16, 17 gemäß der vierten Ausführungsform ist jedoch in Form eines Flächenelements 27 gestaltet. Das Flächenelement 27 enthält einen ersten Kontakt 27a, einen zweiten Kontakt 27b sowie ein leitfähiges Polymer 28. Das leitfähige Polymer 28 ist so in dem Flächenelement 27 positioniert, dass der erste Kontakt 27a und der zweite Kontakt 27b über das leitfähige Polymer 28 miteinander verbunden sind.

Eine Leitung 29 verbindet den ersten Kontakt 27a des Flächenelements 27 mit der Steuerungseinrichtung 9 und eine Leitung 30 verbindet den zweiten Kontakt 27b des Flächenelements 27 mit der Steuerungseinrichtung 9. Über die Leitungen 29, 30 wird ein Messstrom von der Steuerungseinrichtung 9 jeweils durch das Flächenelement 27 geleitet. Der Messstrom wird wiederum dazu verwendet, um den elektrischen Widerstand bzw. eine Veränderung des elektrischen Widerstands an dem leitfähigen Polymer 28 des Flächenelements 27 erfassen bzw. messen zu können.

Das leitfähige Polymer 28 ist so ausgestaltet, dass es durch ein Ausüben eines Drucks von einem nichtleitenden Zustand in einen leitenden Zustand reversibel verändert werden kann. Das leitfähige Polymer 28 weist einen Quantentunneleffekt auf. Das leitfähige Polymer 28 ist auch als Quantum Tunneling Composite (QTC) bekannt. Bei dem leitfähigen Polymer 28 (Quantum Tunneling Composite) sind in dem Zustand, in dem kein Druck ausgeübt wird, die elektrisch leitfähigen Partikel des Polymers 28 (Quantum Tunneling Composite) zu weit voneinander entfernt, als dass diese einen elektrischen Strom durch das Polymer 28 und damit von dem ersten Kontakt 27a zu dem zweiten Kontakt 27b leiten können. Das Polymer 28 ist damit nicht elektrisch leitfähig.

Wenn jedoch ein gewisser Druck auf die Oberfläche des Polymers 28 ausgeübt wird, werden die elektrisch leitfähigen Partikel des Polymers 28 so umgestaltet, dass diese einen elektrischen Strom durch das Polymer 28 und damit von dem ersten Kontakt 27a zu dem zweiten Kontakt 27b leiten können. Mit anderen Worten: durch das Ausüben eines gewissen Drucks auf das Flächenelement 27 wird der leitfähige Polymer 28 (Quantum Tunneling Composite) so umgestaltet, dass eine elektrische Verbindung zwischen dem ersten und zweiten Kontakt 27a, 27b geschlossen wird. Gleichzeitig wird die Leitfähigkeit des leitfähigen Polymers 28 in einem Verhältnis durch den ausgeübten Druck erhöht bzw. der elektrische Widerstand des leitfähigen Polymers 28 reduziert. Je höher der ausgeübte Druck ist, desto stärker reduziert sich der elektrische Widerstand des leitfähigen Polymers 28 und dessen Leitfähigkeit wird erhöht.

Der Druck auf das Flächenelement 27 bzw. auf das leitfähige Polymer 28 wird durch eine Hand eines Anwenders erzeugt, der die Werkzeugmaschine 1 anfasst bzw. greift, um mit dieser zu arbeiten. Das Flächenelement 27 ist so an dem Griffstück 4 positioniert, dass durch die Handinnenfläche ein Druck auf das Flächenelement 27 ausgeübt wird, wodurch die Steuerungseinrichtung 9 von dem ersten Betriebsmodus in den zweiten Betriebsmodus wechselt. Wenn die Werkzeugmaschine 1 gegriffen wurde und sich die Steuerungseinrichtung 9 in dem zweiten Betriebsmodus befindet, kann der Anwender sofort mittels des Schalters 12 den Elektromotor 6 aktivieren sowie mit der Werkzeugmaschine 1 arbeiten.

Aufgrund der speziellen Eigenschaften des hier verwendeten leitfähigen Polymers 28 (Quantum Tunneling Composite) besteht ein exponentieller Zusammenhang zwischen dem ausgeübten Druck auf das leitfähige Polymer 28 (Quantum Tunneling Composite) und der elektrischen Leitfähigkeit bzw. des elektrischen Widerstands des leitfähigen Polymers 28 (Quantum Tunneling Composite). Das heißt, mit zunehmendem Druck auf das leitfähige Polymer 28 (Quantum Tunneling Composite) nimmt der elektrische Widerstand des leitfähigen Polymers 28 exponentiell ab. Durch die Verbindung über die Leitungen kann die Steuerungseinrichtung 9 die Verringerung des elektrischen Widerstands bzw. die Steigerung der Leitfähigkeit des leitfähigen Polymers 20 aufgrund des ausgeübten Drucks erfassen bzw. messen. In der Steuerungseinrichtung 9 wird der erfasste bzw. gemessene Widerstand mit hinterlegten Schwellwerten verglichen. Wenn der erfasste bzw. gemessene Widerstand einen bestimmten Schwellwert übersteigt, wird eine entsprechende Menge an Strom an den Elektromotor 6 geleitet, um diesen in Betrieb zu nehmen. In ähnlicher Weise wird die Strommenge an den Elektromotor 6 erhöht, wenn der Druck auf das Flächenelement 27 steigt und als Folge daraus sich der elektrische Widerstand in dem leitfähigen Polymer 28 reduziert. Gleichermaßen wird die Strommenge an den Elektromotor 6 reduziert, wenn der Druck auf das Flächenelement 27 abnimmt und als Folge daraus sich der elektrische Widerstand in dem leitfähigen Polymer 28 erhöht.

Durch den Vergleich des erfassten bzw. gemessenen Widerstands in dem Flächenelement 27 mit hinterlegten Schwellwerten kann effizient der elektrische Strom bzw. die Strommenge reguliert werden, der von der Energiequelle über die Steuerungseinrichtung 9 zu dem Elektromotor 6 fließt. Durch die Regelung der Strommenge kann folglich auch die Leistungsabgabe (Drehzahl und Drehmoment) des Elektromotors 6 variiert werden. Das Flächenelement 27 mit dem leitfähigen Polymer 28 (Quantum Tunneling Composite) ist als eine Art Schalter ausgestaltet, bei dem ohne entsprechend ausgeübten Druck kein Strom an den Elektromotor 6 gesendet wird. Wenn jedoch ein gewisser Druck auf das leitfähige Polymer 20 (Quantum Tunneling Composite) ausgeübt wird, fungieren das Flächenelement 27 als variables Widerstandselement, durch die mittelbar die Menge an Strom, welche an den Elektromotor 6 gesendet wird, reguliert wird.

## Patentansprüche

1. Werkzeugmaschine (1), enthaltend
- einen Elektromotor (6),
- eine Steuerungseinrichtung (9) zur Steuerung des Elektromotors (6), wobei die Steuerungseinrichtung (9) wenigstens in einen ersten Betriebsmodus und einen zweiten Betriebsmodus einstellbar ist,
- ein Schalter (12), insbesondere ein Potentiometer, zum Betätigen der Steuerungseinrichtung, und
- wenigstens eine Energiequelle (5) zur Versorgung der Werkzeugmaschine mit elektrischer Spannung;
**dadurch gekennzeichnet, dass** wenigstens ein Näherungs- oder Berührungssensor (16, 17) vorgesehen ist zum reversiblen Wechseln von dem ersten Betriebsmodus in den zweiten Betriebsmodus der Steuerungseinrichtung (9), wobei der Näherungs- oder Berührungssensor (16, 17) durch die Annäherung wenigstens eines Körperteils (19) eines Anwenders der Werkzeugmaschine (1) aktivierbar ist.

2. Werkzeugmaschine (1) nach Anspruch 1,
**dadurch gekennzeichnet, dass** der erste Betriebsmodus der Steuerungseinrichtung (9) ein Abschaltmodus und der zweite Betriebsmodus der Steuerungseinrichtung (9) ein Bereitschaftsmodus ist.

3. Werkzeugmaschine (1) nach Anspruch 1 oder 2,
**dadurch gekennzeichnet, dass** der Näherungs- oder Berührungssensor (16, 17) an dem Schalter (12) zum Betätigen der Steuerungseinrichtung (9) positioniert ist.

4. Werkzeugmaschine (1) nach wenigstens einem der Ansprüche 1 bis 3,
**dadurch gekennzeichnet, dass** der Näherungs- oder Berührungssensor (16, 17) in Form eines optischen Näherungs- oder Berührungssensors ausgestaltet ist.

5. Werkzeugmaschine (1) nach wenigstens einem der Ansprüche 1 bis 4,
**dadurch gekennzeichnet, dass** das Wechseln von dem ersten Betriebsmodus in den zweiten Betriebsmodus der Steuerungseinrichtung (9) erst erfolgt, wenn die Annäherung wenigstens eines Körperteils (19) des Anwenders der Werkzeugmaschine (1) an den Näherungs- oder Berührungssensor (16, 17) eine vorbestimmte Zeitdauer (t) überschreitet.
